# EUROPEAN PATENT SPECIFICATION

(11) **EP 1 213 185 B1**
(45) Date of publication and mention of the grant of the patent: **29.12.2004**
(21) Application number: 01830705.8
(22) Date of filing: 16.11.2001
(51) Int. Cl.: B60R 3/02

(54) **Retractable ladder**
Einziehbare Leiter
Echelle escamotable

(30) Priority: 05.12.2000 IT FI000112 U; 09.04.2001 IT FI010032 U
(43) Date of publication of application: 12.06.2002
(73) Proprietor: Nardini, Davide, 50019 Sesto Fiorentino (Firenze) (IT)
(72) Inventor: Nardini, Davide, 50019 Sesto Fiorentino (Firenze) (IT)
(74) Representative: Martini, Lazzaro

(56) References cited:
- EP-A- 0 559 624
- US-A- 4 369 984

## Description

The present invention relates to a retractable ladder especially, for vehicles such as campers, caravans, vans and the like.
Patents US 4.110.673, EP 447.372, EP 559.624 and US 4.369.984 disclose actuator devices for the rotation of ladders' steps for vehicles according to the preamble of claim 1.

The present invention has the object to simplify the manufacturing of such devices and improve their reliability and operation.

This result has been achieved, according to the invention, by providing an apparatus having the characteristics indicated in claim 1. Further characteristics being set forth in the dependent claims.

The advantages deriving from the present invention lie essentially in the fact that the retractable ladder is simpler to make, cost-effective and reliable even after a prolonged and repeated use thereof; that the ladder with relevant actuator mechanism is lighter and can be received in a more restricted space and, accordingly, can be mounted also on vehicles which have spaces of more limited capacity where to store it.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a side view of a ladder, according to the invention, in full-open or withdrawn configuration;
- Fig. 2 is a side view of the ladder in Fig. 1, in a configuration taken up upon a stage intermediate between those of full withdrawal or opening and of full feedback or closing;
- Fig. 3 is a side view of the ladder in the preceding figures, in a configuration of full closing or feedback;
- Fig. 4 is a side view of one of the connecting rods solid to the actuator shaft;
- Fig. 5 is a schematic representation of the system for driving the shaft (4);
- Fig. 6 shows an enlarged detail of the schematic illustration in Fig. 5;
- Fig. 7 is a schematic side view of a retractable ladder according to a further embodiment, in full open or withdrawn condition;
- Fig. 8 is a schematic side view of the ladder in Fig. 7, in a configuration taken up upon a stage intermediate between those of full withdrawal or opening and of full feedback or closing;
- Fig. 9 is a side view of the ladder in Figs. 7 and 8, in a configuration of full closing or feedback;
- Fig. 10 is a side view of one of the connecting rods solid to the actuator shaft;
- Fig. 11 is a see-through side view of a retractable ladder, according to a third embodiment, in a configuration of full opening or withdrawl;
- Fig. 12 is a side view corresponding to that in Fig. 11 but not allowing to see through; and
- Fig. 13 is a see-through side view of the ladder in Fig. 11, in a condition of closing or feedback.

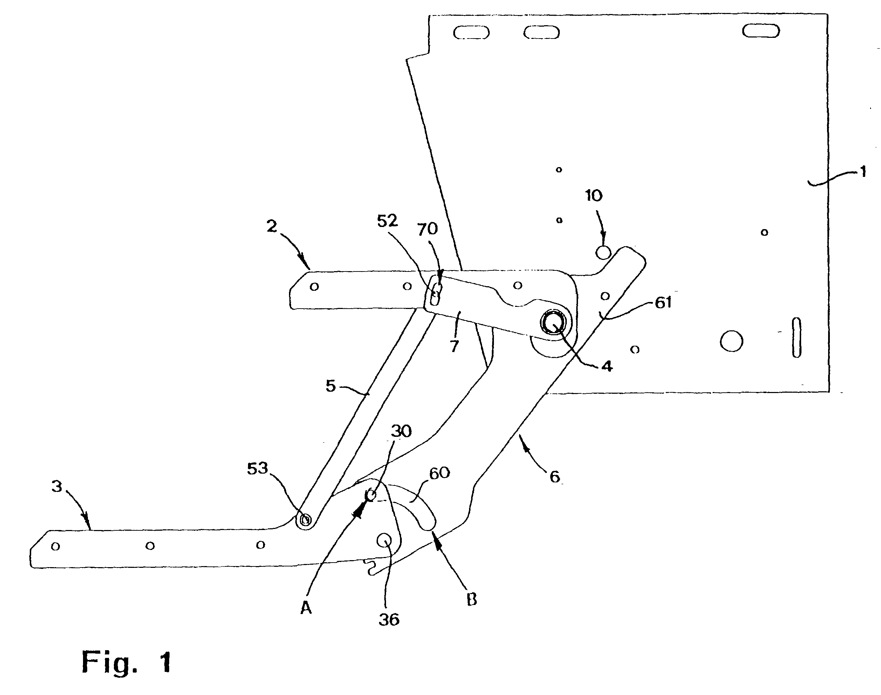

Reduced to its basic structure, and reference being made to the Figs. 1-6 of the attached drawings, a retractable ladder according to the invention comprises a bearing structure (1) to be securely associated with a vehicle (not shown) within a space of suitable dimensions, an upper step (2) and a lower step (3).
The upper step (2) is idly mounted on a shaft (4) supported by the structure (1) and extending parallel to the two steps (2, 3). The lower step (3) is engaged with the upper step (2) by means of two rods (5) whose ends are respectively hinged on the sides of the two steps (2, 3) via corresponding cylindrical hinges (52, 53) having axis parallel to the shaft (4). Moreover, the lower step (3) is connected to the shaft (4) by two lateral arms (6) each of which, on one side (61), being idly mounted on the shaft (4) and, on the opposite side, being engaged with the lower step (3) via a cylindrical hinge (36) having axis parallel to the shaft (4).

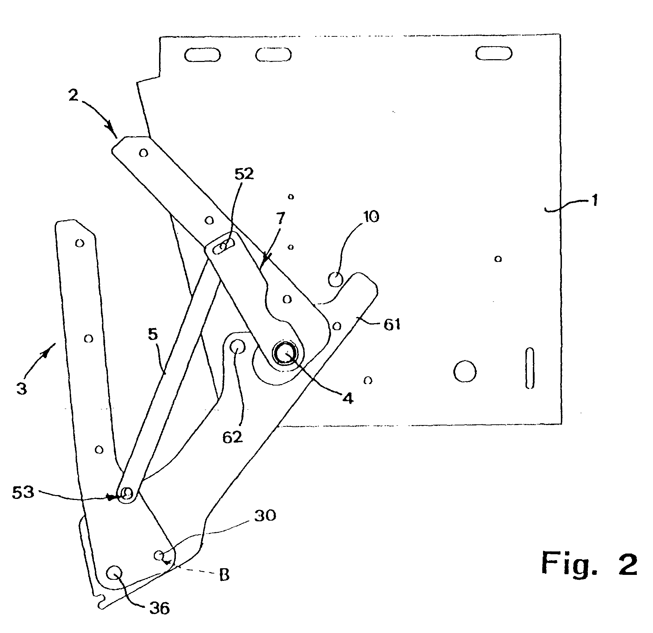

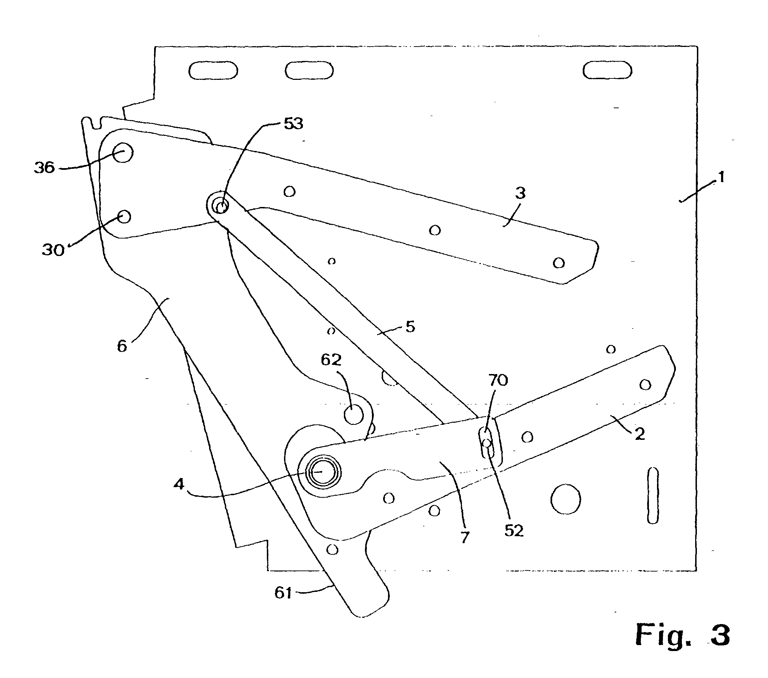

Moreover, each of said arms (6) exhibits, in correspondence of its connection with the lower step (3), a slot (60) having a profile of arc of circumference, which slot results in a position above said hinge (36) and with its concavity facing the latter. The said slot (60) acts as a guide for a corresponding pin (30) provided on the flank of the lower step (3). The opposite ends (A, B) of the slot (60) define two points of limit stop for the pin (30) respectively in the ladder's opening configuration (as shown in Fig. 1) and closing configuration (as shown in Figs. 2 and 3). The upper step (2) - and with it, the lower step (3) via the rod (5) - is connected to the shaft (4) by a pair of connecting rods (7). Each of said connecting rods (7) is keyed, on one side, on the shaft (4) and, on the opposite side, is provided with a slot (70) having a profile of arc of circumference and acting as a guide for the pivot of said hinge (52). Each of said connecting rods (7) is in correspondence of a flank of the upper step (2).

Alternatively, only one connecting rod (7) may be provided, for example in central position on the shaft (4), and connected to the upper step (2) by a single pivot or plug parallel to the same shaft (4). It will be appreciated that in place of the pair of connecting rods (7) or of a single connecting rod (7) any suitable member may be provided able to transmit the motion from the shaft (4) to the upper step (2) to rotate the latter about the axis of same shaft (4).

The said shaft (4) can be operated by an electric motor with a motor-reducer (40) to be connected with the electric circuit of the vehicle. Alternatively, the rotation of shaft (4) may be obtained manually with the aid of a crank (not shown).
In the drawings of Figs. 1-3, only one rod (5), one arm (6) and one connecting rod (7) can be seen in the relevant side views.

The operation of the above apparatus is as follows. Starting from the full-withdrawn ladder's configuration of Fig. 1, the shaft (4) is driven into clockwise rotation - in the plane of the drawing - and, accordingly, the connecting rods (7) are so rotated as well. When the lower end of the slot (70) of each connecting rod (7) intercepts the pivot of the corresponding hinge (52), the upper step (2) starts rotating upwards. As a consequence, the rods (5), which act as tension rods, exert a traction over the lower step (3) so that the latter rotates about the hinges (36) which, as illustrated in the accompanying drawings, are offset with respect to the hinges (52) and (53). The said rotation of the lower step (3) goes on until each pin (30) intercepts the point (B) of the slot (60) provided on the arm (6) (configuration of Fig. 2). A further rotation of the shaft (4) implies the corresponding rotation of the whole of steps (2, 3), connecting rods (7) and arms (6), until a full closing or feedback configuration is reached as in Fig. 3.

The withdrawal of the ladder corresponds to a sequence of positions and movements opposite to that previously described.
For a safer use of the system, the structure (1) may be provided with transverse appendixes (10) able to form elements of limit stop when pulling out the ladder. More specifically, reference being made to the accompanying drawings, the limit stops (10) intercept the arm (6) thereby preventing it from rotating downwards past the position of Fig. 1.

Advantageously, each arm (6) exhibits an abutment (62) against which the upper step (3) rests when the ladder is withdrawn, that is, in the configuration of Fig. 1. The said abutment (62) is provided at a predetermined point of arm (6), that is, at a point ensuring that the step (2) will lie on the horizontal plane when the ladder is in its open or withdrawn configuration.
Moreover, advantageously, only one tension rod (5) can be used in median position, for example, instead of two tension rods.
The whole can be made, for example, in metallic material.
If an electric motor is used for the operation of the system, that is, for the rotation of shaft (4), two electric limit switches (not shown) can be provided for stopping it and cause it to take the configurations of Fig. 1 and Fig. 3.

Advantageously, as an accident prevention measure, the electric motor can be provided with a torque limiter to prevent any foreign body from striking the steps (2, 3), arms (6), rods (5) or connecting rods (7), during their movements, and damaging these and/or the ladder.

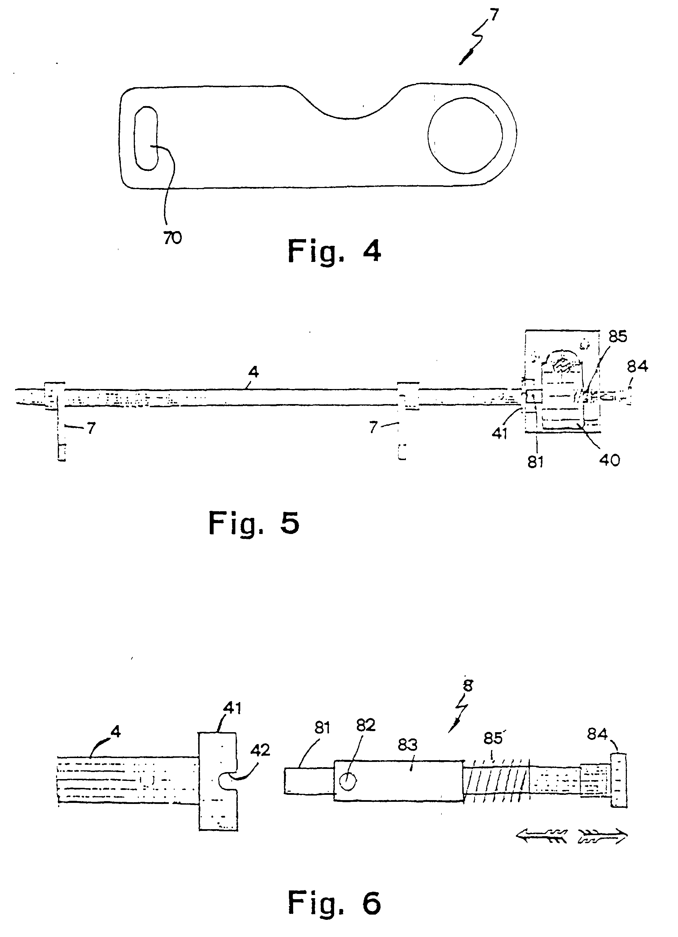

Advantageously, reference being made to Figs. 5 and 6 of the accompanying drawings, in order to manually withdraw and push back the steps (2, 3) in an emergency situation, that is, in case of a blocking of the motor-reducer (4) or failure of the relevant electric circuit, a device (8) may be installed for disengaging the shaft (4) and consisting of a horizontal metal section bar (81) with square cross-section which, on one side, is connected with the motor-reducer (40) and, on the other, is inserted into a bush (41) solid to the end of shaft (4) which results on the same side as motor-reducer (40), said bush being provided with a radial groove (42) intended for housing, when in its connection condition, a pin (82) projecting from a supporting sleeve (83) fitted onto said section bar (81). A knob (84) being provided solid to the free end of said section bar (81) to move it manually.
In this way, the transmission of the motion from the motor-reducer (40) to the shaft (4) is achieved by means of device (8). The withdrawal of the knob (84) in the direction away from the shaft (4), causes the pin (82) to come out from its seat (42) in the bush (41) and, as a consequence, the shaft to become disengaged and allow for the manual movement thereof. The release of knob (84) causes the transmission to be restarted by the action of a spring (85) which is coaxial to the section bar (81) and provides for the re-insertion of pin (82) into the groove (42) of bush (41).

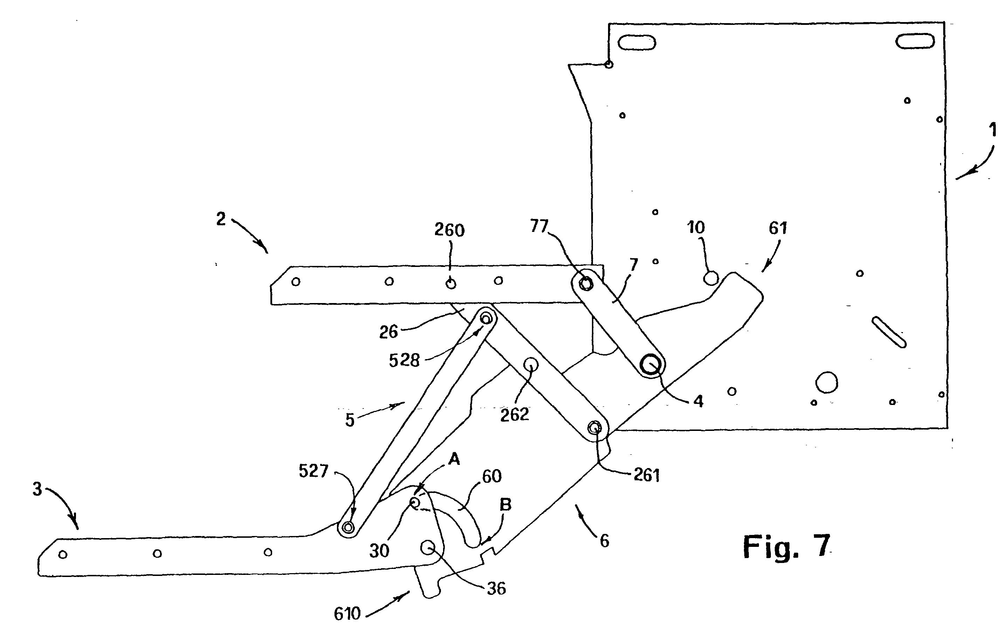

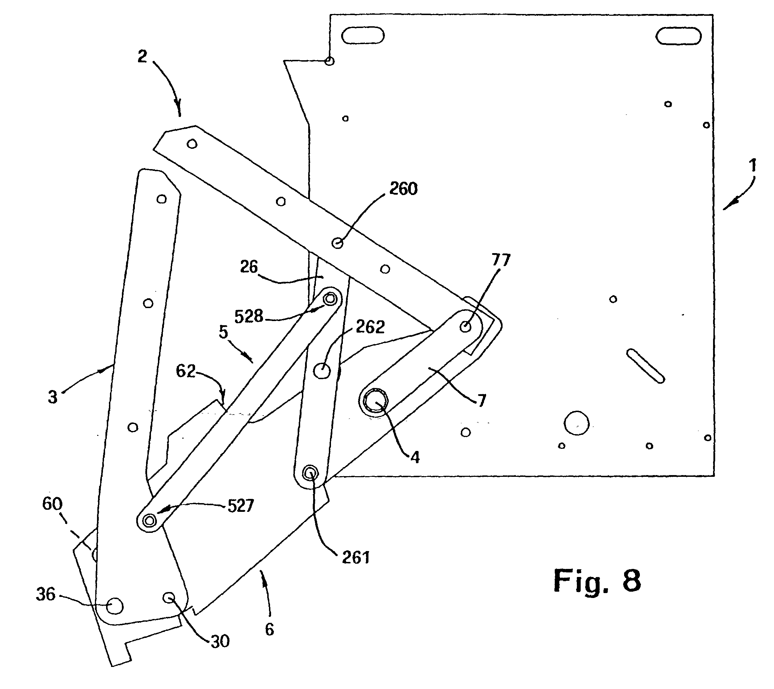

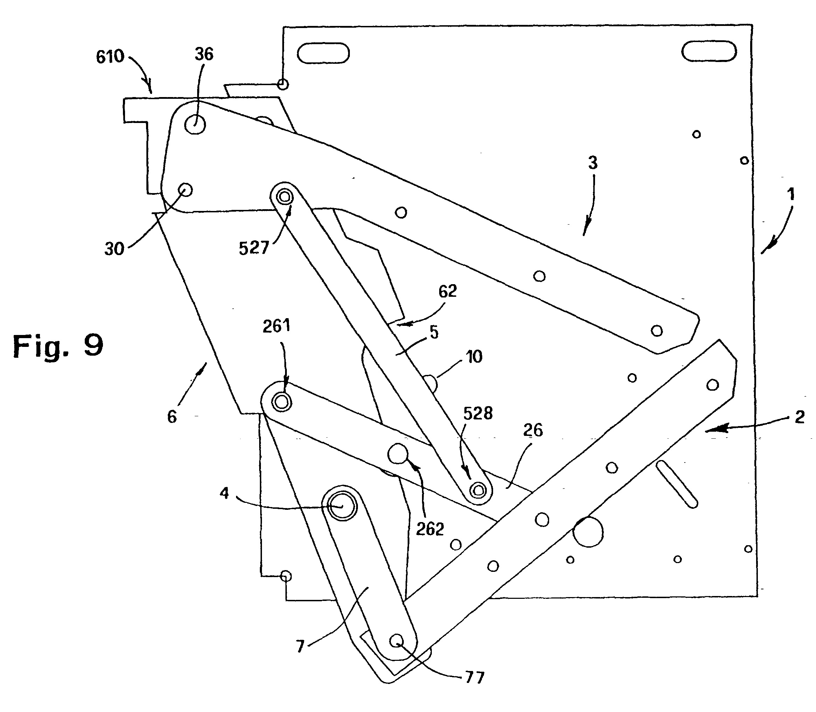

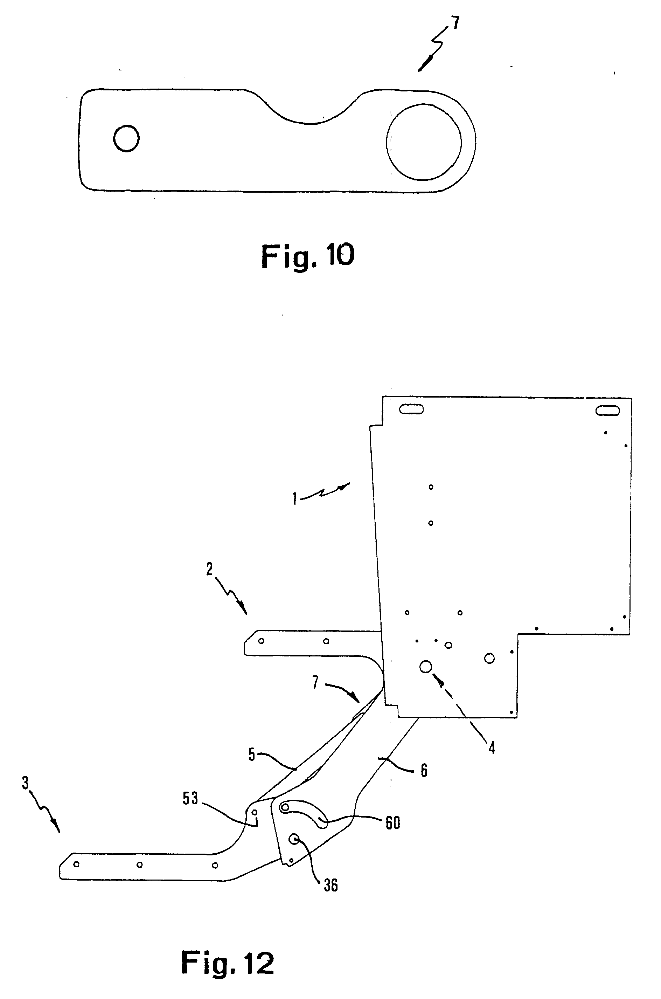

With reference to the example illustrated in Figs. 7-10 of the accompanying drawings, a retractable ladder according to the invention comprises a bearing structure (1) to be securely engaged with a vehicle (not shown), within a space of suitable dimensions, an upper step (2) and a lower step (3). The said upper step (2) is connected to a shaft (4) via two connecting rods (7) (one for each side or flank of the step).
Each connecting rod (7) is keyed, on one side, to the shaft (4) and, on the opposite side, to the upper step (2) by a cylindrical hinge (77) with axis parallel to that of shaft (4). Moreover, the said upper step (2) is linked to the shaft (4) via two lateral arms (6) each of which is idly mounted on the shaft (4) in correspondence of a rear portion (61), and a rod (26) is hinged to each of said arms, with hinge axis (261) parallel to the axis of shaft (4), which rod (26) is likewise hinged, on the opposite side, to a corresponding flank of the upper step (2) at a point (260) further ahead with respect to the hinge (77) linking the respective connecting rod (7) with the same step (2). The free or forward ends (610) of said arms (6) support the lower step (3) in cooperation with the rods (26). More precisely, each flank of the lower step (3) is connected with a corresponding arm (6) by means of a cylindrical hinge (36) having axis parallel to that of shaft (4).
Besides, the lower step (3) is engaged with the two rods (26) by two corresponding tension rods (5). Each of these is hinged to the lower step (3) and to the rod (26) by hinges (527, 528) having axis parallel to the shaft (4). The said hinges (527, 528) are provided, respectively, in the rear part of the corresponding flank of the lower step (3) and at a point of the corresponding rod (26) relatively close to said hinge (260), that is, closer to hinge (260) than to the opposite hinge (261).
Each of said arms (6) exhibits, in correspondence of the connection thereof with the lower step (3), a slot (60) having a profile of arc of circumference, which slot results in a position above said hinge (36) and with its concavity facing the latter. The said slot (60) acts as a guide for a corresponding pin (30) provided on the respective flank of the lower step (3). The opposite ends (A, B) of the slot (60) define two points of limit stop for the pin (30) respectively in the ladder's opening configuration (as shown in Fig. 7) and closing configuration (as shown in Figs. 8 and 9).

In the drawings of Figs. 1-3, only one connecting rod (7), one rod (26), one arm (6) and one tension rod (5) can be seen in the relevant side views.
Each of said rods (26) has a transverse pin (262) intended to rest onto a corresponding abutment (62) of the respective arm (6) in the configuration of withdrawn or open ladder of Fig. 7.

The operation of the above described apparatus is as follows.
Starting from the full-open ladder's configuration of Fig. 1, the shaft (4) is driven into clockwise rotation - in the plane of the drawing - and, accordingly, the connecting rods (7) are so rotated as well. This causes the corresponding rotation, and retraction as well, of the upper step (2), and the rotation of rods (26) about the hinges (261). At the same time, the tension rods (5), being engaged with rods (26), exert a traction over the lower step (3), in correspondence of the hinges (527), causing the same lower step to rotate upwards until the pins (30) abut against the limit stops (B) of slots (60) (see Fig. 8). A further rotation of the shaft (4) implies the corresponding rotation of the whole of steps (2, 3), tension rods (5), rods (26), connecting rods (7) and arms (6), until a full closing or feedback configuration is reached as in Fig. 9.
The withdrawal of the ladder corresponds to a sequence of positions and movements opposite to that previously described.

For a safer use of the system, the structure (1) may be provided with transverse appendixes (10) able to form elements of limit stop when pulling out the ladder. More specifically, reference being made to the example illustrated in the accompanying drawings, the limit stops (10) intercept the arm (6) thereby preventing it from rotating downwards past the position of Fig. 7.

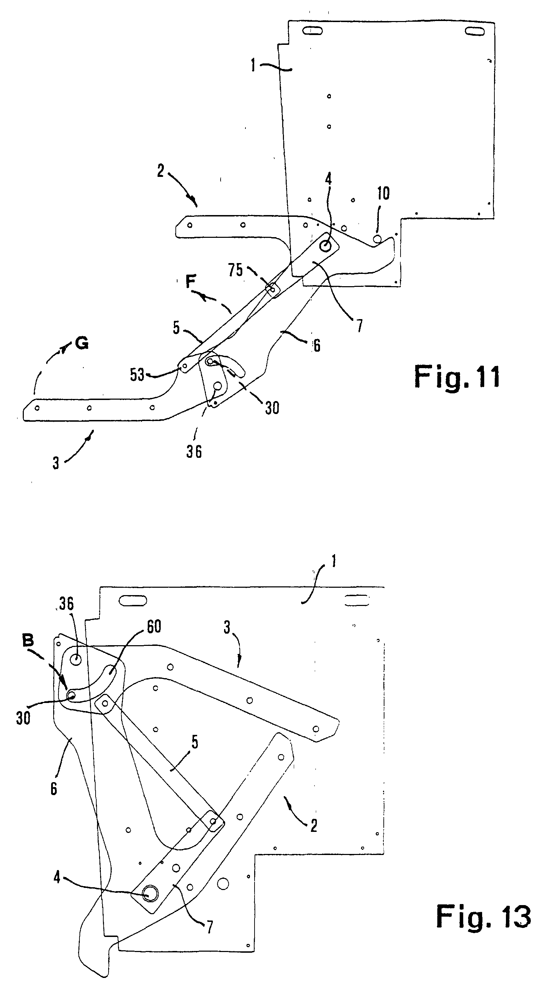

Referring now to the example illustrated in Figs. 11-13 of the accompanying drawings, the arms (6) and the lower step (3) are substantially shaped and connected to each other as in the preceding examples. The upper step (2) and the free end of arms (6) form a single body, resulting solid to each other and idly disposed on the shaft (4). In this case, each connecting rod (7), being keyed at one end on the shaft (4), is connected on the opposite end to the respective tension rod (5) by a hinge (75) whose axis is parallel to the shaft (4). The other end of each tension rod (5) is connected to a corresponding flank of the lower step (3) by a hinge (53) whose axis is parallel to the that of the other hinge, and thus to shaft (4). Also in this case, the bearing structure (1) may be provided with transverse appendixes (10) able to act as limit stops when pulling out the ladder.

The operation is as follows.
Starting from the configuration of Fig. 11, the shaft (4) is driven into clockwise rotation - in the plane of the drawing - and, accordingly, the connecting rods (7) are so rotated as well. This causes the corresponding rotation of the tension rods (5) about the hinges (36) as indicated by arrow (F) in Fig. 11, until the action so exerted by the tension rod (5) upon the lower step (3) will determine the positioning of the pins (30) against the limit stops (B) of slots (60) formed in the arms (6). A further rotation of the connecting rods (7) will determine the rotation of the assembly about the shaft (4) until the configuration shown in Fig. 13 is reached.

According to the example shown in Figs. 1-3 and 7-9, the tension rods (5) are engaged with the connecting rods (7) via the upper step (2). According to the example shown in Figs. 11-13, the tension rods (5) are connected directly with the connecting rods (7) via the hinges (75), the linking between the tension rods (5) and the upper step (2) being achieved by the connecting rods (7), and the linking between the connecting rods (7) and the upper step (2) being achieved via the tension rods (5) and lower step (3), the latter being hinged to arms (6) making up one body with the upper step (2).

## Claims

1. Retractable ladder comprising a bearing structure (1) to be securely associated with a vehicle and two steps (2), (3) provided with relevant connection means and driving means acting thereupon, suitable for positioning the ladder into a first configuration or position of use, in which the steps are accessible and, respectively, into a second configuration or rest position, in which the ladder is withdrawn, the means of connection between the first or upper step (2) and the second or lower step (3) comprising a pair of arms (6), the ladder being **characterized in that**:
- said arms (6) are idly mounted onto a transverse actuator shaft (4), in correspondence of one respective end (61), and engaged, in correspondence of the other end, with said lower step (3) by a pivot (36), said arms (6) having a point (A) of abutment or limit stop upon the opening travel for a pin (30) exhibited by the lower step (3);
- one or more tension rods (5) with one end engaged with the upper step (2) and with the other end engaged with the lower step (3) are provided;
- means associated with said shaft (4) are connected to the upper step (2) to cause the rotation thereof under control of the shaft (4).

2. Ladder according to claim 1, **characterized in that** said means for transmitting the motion of the shaft (4) to the upper step (2) comprise one or more connecting rods (7) being keyed onto the shaft (4) and, on the opposite side, being hinged to the upper step (2).

3. Ladder according to claim 1, **characterized in that** said tension rods consist of rigid rods (5).

4. Ladder according to claim 1, **characterized in that** said arms (6) exhibit a second abutment (B) of limit stop upon the opening travel of the lower step (3).

5. Ladder according to claims 1 and 4, **characterized in that** said abutment points (A, B) of arms (6) correspond to the two ends of a slot (60) with profile of arc of circumference provided on the arms (6) on the side connected with the lower step (3).

6. Ladder according to claim 2, **characterized in that** each connecting rod (7) is connected with said upper step (2) via pivots (52) provided on the step (2) and inserted into a slot (70) formed in the connecting rod (7).

7. Ladder according to claim 1, **characterized in that** the means for driving the ladder comprise an electric motor with motor-reducer (40) acting on said shaft (4).

8. Ladder according to claim 1, **characterized in that** the means for driving the ladder comprise manual means of transmission of the motion which on said shaft (4).

9. Ladder according to claim 1, **characterized in that** it comprises a limit stop for the driving means, which limit stop is made up of at least one abutment (10) intended to interact with said arms (6) when the ladder is in its positioning for use.

10. Ladder according to claims 1 and 7, **characterized in that** it comprises means for disengaging said shaft (4) from said motor-reducer (40).

11. Ladder according to claim 1, **characterized in that** said steps (2, 3) are connected by two rods (26) and two tension rods (5), each of said rods (26) being connected on one side to a flank of the upper step (2) and, on the other, to the corresponding arm (6), each of said rods (26) being also connected to the lower step (3) via a corresponding tension rod (5).

12. Ladder according to claim 11, **characterized in that** each of said rods (26) exhibits a transverse pin (262) intended for abutting against a corresponding abutment point (62) of the respective (arm) in the configuration of withdrawn or open ladder.

13. Ladder according to claim 1, **characterized in that** said arms (6) and said upper step (2) make up one body, and **in that** said tension rods (5) are engaged with the upper step (2) via two connecting rods (7) being keyed onto said shaft (4).

## Patentansprüche

1. Einziehbare Leiter, die eine an einem Fahrzeug zu befestigende Tragstruktur (1) und zwei Stufen (2, 3) umfasst, die mit entsprechenden Verbindungs- und Antriebseinrichtungen versehen sind, die auf sie einwirken und geeignet sind, die Leiter in eine erste Konfiguration oder Verwendungsposition, in der die Stufen zugänglich sind, bzw. in eine zweite Konfiguration oder Ruheposition zu bringen, in der die Leiter zurückgezogen ist, wobei die Verbindungseinrichtungen zwischen der ersten oder oberen Stufe (2) und der zweiten oder unteren Stufe (3) zwei Arme (6) umfassen, **dadurch gekennzeichnet, daß**
- die Arme (6) leerlaufend auf einer querverlaufenden Betätigungswelle (4) im Bereich eines entsprechenden Endes (61) montiert sind und im Bereich des anderen Endes mit der unteren Stufe (3) durch ein Gelenk (36) in Eingriff stehen, wobei die Arme (6) für einen Stift (30), der an der unteren Stufe (3) vorgesehen ist, einen Anschlagspunkt (A) oder einen Begrenzungsanschlag bezüglich der Öffnungsbewegung aufweisen,
- daß ein oder mehrere Zugstäbe (5) vorgesehen sind, die mit einem Ende mit der oberen Stufe (2) und mit dem anderen Ende mit der unteren Stufe (3) in Eingriff stehen, und daß
- der Welle (4) zugeordnete Mittel mit der oberen Stufe (2) verbunden sind, um unter der Steuerung der Welle (4) deren Drehung zu bewirken.

2. Leiter nach Anspruch 1, **dadurch gekennzeichnet, daß** die Mittel zur Übertragung der Bewegung der Welle (4) auf die obere Stufe (2) einen oder mehrere Verbindungsstäbe (7) umfassen, die auf die Welle (4) aufgekeilt und an der anderen Seite an der oberen Stufe (2) angelenkt sind.

3. Leiter nach Anspruch 1, **dadurch gekennzeichnet, daß** die Zugstäbe aus starren Stäben (5) bestehen.

4. Leiter nach Anspruch 1, **dadurch gekennzeichnet, daß** die Arme (6) einen zweiten Anschlag (B) oder Begrenzungsanschlag für die Öffnungsbewegung der unteren Stufe (3) umfassen.

5. Leiter nach den Ansprüchen 1 und 4, **dadurch gekennzeichnet, daß** die Anschlagspunkte (A, B) der Arme (6) den beiden Enden eines Schlitzes (60) mit einem Umfangsbogenprofil entsprechen, der an den Armen (6) auf der mit der unteren Stufe (3) verbundenen Seite vorgesehen ist.

6. Leiter nach Anspruch 2, **dadurch gekennzeichnet, daß** jeder Verbindungsstab (7) mit der oberen Stufe (2) über Gelenke (52) verbunden ist, die an der Stufe (2) vorgesehen und in einen Schlitz (70) eingefügt sind, der in dem Verbindungsstab (7) ausgebildet ist.

7. Leiter nach Anspruch 1, **dadurch gekennzeichnet, daß** die Mittel zum Antreiben der Leiter einen Elektromotor mit einem Untersetzungsgetriebe (40) umfassen, das auf die Welle (4) einwirkt.

8. Leiter nach Anspruch 1, **dadurch gekennzeichnet, daß** die Einrichtungen zum Antreiben der Leiter von Hand betätigbare Bewegungsübertragungseinrichtungen umfassen, die auf die Welle (4) einwirken.

9. Leiter nach Anspruch 1, **dadurch gekennzeichnet, daß** sie einen Anschlagsstop für die Antriebseinrichtungen umfasst, wobei dieser Anschlagsstop aus wenigstens einem Anschlag (10) besteht, der dazu dient, mit den Armen (6) zusammenzuwirken, wenn sich die Leiter in ihrer Verwendungsposition befindet.

10. Leiter nach den Ansprüchen 1 und 7, **dadurch gekennzeichnet, daß** sie Einrichtungen umfasst, die dazu dienen, die Welle (4) von dem Untersetzungsgetriebe (40) außer Eingriff zu bringen.

11. Leiter nach Anspruch 1, **dadurch gekennzeichnet, daß** die Stufen (2, 3) durch zwei Stäbe (26) und zwei Zugstäbe (5) verbunden sind, wobei jeder der Stäbe (26) auf einer Seite mit einer Flanke der oberen Stufe (2) und auf der anderen Seite mit dem entsprechenden Arm (6) verbunden ist, wobei jeder der Stäbe (26) auch mit der unteren Stufe (3) über einen entsprechenden Zugstab (5) verbunden ist.

12. Leiter nach Anspruch 11, **dadurch gekennzeichnet, daß** jeder der Stäbe (26) einen quer verlaufenden Stift (262) aufweist, der dazu dient, an einem entsprechenden Anschlagspunkt (62) des entsprechenden Arms in der zurückgezogenen oder offenen Konfiguration der Leiter anzuschlagen.

13. Leiter nach Anspruch 1, **dadurch gekennzeichnet, daß** die Arme (6) und die obere Stufe (2) einen Körper bilden, und daß besagte Zugstäbe (5) mit der oberen Stufe (2) über zwei Verbindungsstäbe (7) in Eingriff stehen, die auf die Welle (4) aufgekeilt sind.

## Revendications

1. Echelle rétractable qui comprend une structure en poutre (1) à fixer fermement sur un véhicule et deux barreaux (2, 3) fournis avec les moyens de raccord pertinents et les moyens de déplacement agissant sur ces derniers, qui conviennent pour le positionnement de l'échelle en une premiere configuration ou position d'utilisation, dans laquelle les barreaux sont accessibles et, respectivement, en une deuxième configuration ou position de repos, dans laquelle l'échelle est rétractée, le moyen de raccord entre le premier barreau ou barreau supérieur (2) et le deuxième barreau ou barreau inférieur (3) comprenant une paire de bras (6), l'échelle étant **caractérisée en ce que** :
- lesdits bras sont montés de manière libre sur une tige de vérin transversale (4), en correspondance avec une extrémité respective (61), et engagés, en correspondance avec l'autre extrémité, avec ledit barreau inférieur (3) par un pivot (36), lesdits bras (6) présentant un point (A) de butée ou arrêt de limitation sur le parcours d'ouverture par l'intermédiaire d'une cheville (30) placée sur le barreau inférieur (3) ;
- une ou plusieurs tiges de tension (5) sont fournies avec une extrémité engagée dans le barreau supérieur (2) et l'autre extrémité engagée dans le barreau inférieur (3) ;
- des moyens associés à ladite tige (4) sont raccordés au barreau supérieur (2) afin de provoquer la rotation sous contrôle de la tige (4).

2. Echelle selon la revendication 1, **caractérisée en ce que** lesdits moyens de transmission du mouvement de la tige (4) au barreau supérieur (2) comprennent une ou plusieurs tiges de raccordement (7) clavetées sur la tige (4) et, du coté opposé, articulées sur le barreau supérieur (2).

3. Echelle selon la revendication 1, **caractérisée en ce que** lesdites tiges de tension consistent en des tiges rigides (5).

4. Echelle selon la revendication 1, **caractérisée en ce que** lesdits bras (6) présentent une deuxième butée (B) d'arrêt de limitation sur le parcours d'ouverture du barreau inférieur (3).

5. Echelle selon les revendications 1 et 4, **caractérisée en ce que** les points de butée (A, B) des bras (6) correspondent aux deux extrémités d'une fente (60) selon le profil d'un arc de circonférence fournie sur les bras (6) du coté raccordé au barreau inférieur (3).

6. Echelle selon la revendication 2, **caractérisée en ce que** chaque tige de raccordement (7) est reliée audit barreau supérieur (2) par l'intermédiaire de pivots (52) fournis sur le barreau (2) et insérés dans une fente (70) formée dans la tige de raccordement (7).

7. Echelle selon la revendication 1, **caractérisée en ce que** le moyen de déplacement de l'échelle comprend un moteur électrique avec réducteur (40) qui agit sur ladite tige (4).

8. Echelle selon la revendication 1, **caractérisée en ce que** le moyen de déplacement de l'échelle comprend un moyen manuel de transmission du mouvement sur ladite tige (4).

9. Echelle selon la revendication 1, **caractérisée en ce qu'**elle comprend un arrêt de limitation pour le moyen de déplacement, arrêt de limitation qui est constitué d'au moins une butée (10) destinée à réagir avec lesdits bras (6) lorsque l'échelle se trouve dans sa position d'utilisation.

10. Echelle selon les revendications 1 et 7, **caractérisée en ce qu'**elle comprend un moyen de désengagement de ladite tige (4) dudit réducteur (40).

11. Echelle selon la revendication 1, **caractérisée en ce que** lesdits barreaux (2, 3) sont reliés par deux tiges (26) et deux tiges de tension (5), chacune desdites tiges (26) étant reliée sur un côté à une face du barreau supérieur (2) et, de l'autre coté, au bras correspondant (6), chacune desdites tiges (26) étant également raccordée au barreau inférieur (3) par l'intermédiaire d'une tige de tension correspondante (5).

12. Echelle selon la revendication 11, **caractérisée en ce que** chacune desdites tiges (26) présente une cheville transversale (262) destinée à faire butée contre un point de butée correspondant (62) du (bras) respectif, dans la configuration d'une échelle rétractée ou ouverte.

13. Echelle selon la revendication 1, **caractérisée en ce que** lesdits bras (6) et ledit barreau supérieur (2) forment une seule entité, et **en ce que** lesdites tiges de tension (5) sont engagées dans le barreau supérieur (2) par l'intermédiaire de deux tiges de raccordement (7) clavetées sur ladite tige (4).
